# EUROPEAN PATENT APPLICATION

(11) **EP 4 756 697 A1**
(43) Date of publication of application: **10.06.2026**
(21) Application number: 25202093.8
(22) Date of filing: 15.09.2025
(51) Int. Cl.: G06Q 40/02, G06Q 40/06

(54) **METHOD AND SYSTEM TO PREDICT CHANGE IN FUTURE FUND RATE**

(30) Priority: 06.12.2024 IN 202421096369
(71) Applicant: Tata Consultancy Services Limited, Maharashtra (IN)
(72) Inventor: BHAT, Jyoti, 560066 Bangalore, Karnataka (IN); KALELE, Amit, 411006 Pune, Maharashtra (IN); KAPASE, Mrunali Hindeshwar, 411057 Pune, Maharashtra (IN); KUMAR, Nishant, 400601 Thane, Maharashtra (IN)
(74) Representative: Goddar, Heinz J.

(57) **Abstract**

The embodiments of the present disclosure herein address unresolved problems of predicting future fund rate in the next meeting of a financial regulatory body responsible for regulation of interest rate based on current economic conditions and data of last meeting happened. Embodiments herein provide a method and system for predicting change in a future fund rate by a financial regulatory body responsible for regulation of interest rates. Herein, textual data as well as numerical data are collected to extract useful textual summary of forward-looking statements from large corpus of text data using a pre-trained Large Language Model (LLM) which will contribute to predicting future fund rate. A domain insight matrix is used as a comprehensive framework for guiding the pre-trained LLM on how to approach a task and validate the outputs based on predefined categories and parameters set by domain experts. With prompt optimization efforts, a good quality summary of forward-looking statements is achieved.

## Description

### CROSS-REFERENCE TO RELATED APPLICATIONS AND PRIORITY

The present application claims priority from Indian patent application number 202421096369, filed on December 06, 2024.

### TECHNICAL FIELD

The disclosure herein generally relates to the field of future fund rate prediction using a combination of traditional Machine Learning (ML) and Generative Artificial Intelligence (Gen-AI), and more particularly, a method and system for predicting change in a future fund rate by a financial regulatory body responsible for regulation of interest rate using a combination of traditional ML and Gen AI.

### BACKGROUND

The Federal Open Market Committee (FOMC) is a policymaking body of the Federal Reserve. It sets the target federal funds rate, based on prevailing economic conditions. The federal funds rate can influence short-term rates on consumer loans and credit cards. Investors monitor the federal funds rate because it has an impact on the stock market.

Forecasting the fluctuation of prices for a financial asset over a specific period is a crucial task in financial analysis, essential for investors. With unprecedented advances in multimodal learning, investors now have access to a vast amount of unstructured data for financial prediction. Moreover, the non-verbal information involved in the visual and acoustical modalities (e.g., vocal tone and facial expressions) can be indicative and correlated with trading activities in the financial market. One such abundant source of multimodal information is the Monetary Policy Conference (MPC's) call. Existing models have underscored the influence of MPC calls on financial stock markets. Existing solutions do not consider the combination of minutes of the meeting (MoM) and numerical values with feature importance which has proven to provide better accuracy in prediction.

Challenges faced in the existing models are forward-looking statement extractions. Existing solutions depend on subject matter experts for data analysis achieve an expected summary of forward-looking statements. Further, the problem is to predict change in federal fund rate based on current meeting data and economic conditions and the existing models utilizing a regression model.

### SUMMARY

Embodiments of the present disclosure present technological improvements as solutions to one or more of the above-mentioned technical problems recognized by the inventors in conventional systems. For example, in one embodiment, a method for predicting change in a future fund rate by a financial regulatory body responsible for regulation of interest rate is provided. The processor-implemented method includes collecting, via an Input/Output (I/O) interface, a plurality of historical minutes of meeting of the financial regulatory body responsible for regulation of interest rate, pre-processing the collected numerical data using the LLM to derive a plurality of numerical variables from the collected numerical data and selecting one or more numerical variables from the plurality of numerical variables based on a causal based feature importance with one or more domain inputs and a feature importance score.

Further, the processor-implemented method includes identifying one or more forward looking statements from the collected textual data using a pre-trained large language model (LLM) to generate a textual summary of the one or more forward looking statements and classifying the generated textual summary of the one or more forward looking statements into three classes for a direction of change in an interest rate using the pre-trained LLM, wherein the three classes comprising of a hawkish class, a neutral class and a dovish class. Herein, a domain insight matrix is used to optimize prompts for the pre-trained LLM. Furthermore, the processor-implemented method includes combining the classified generated textual summary into three classes for a direction of change in an interest rate with the selected one or more numerical variables to train a machine learning (ML) multi-class classification model and predicting a change in the interest rate using the trained machine learning (ML) multi-class classification model.

In another embodiment, a system for predicting change in a future fund rate by a financial regulatory body responsible for regulation of interest rate is provided. The system comprises a memory storing a plurality of instructions, one or more Input/Output (I/O) interfaces, and one or more hardware processors coupled to the memory via the one or more I/O interfaces. The one or more hardware processors are configured by the instructions to collect, via an Input/Output (I/O) interface, a plurality of historical minutes of meeting of the financial regulatory body responsible for regulation of interest rate, wherein the plurality of historical minutes of meeting includes a textual data and a numerical data.

The one or more hardware processors are configured by the instructions to pre-process the collected numerical data using a pre-trained large language model (LLM) to derive a plurality of numerical variables from the collected numerical data, select one or more numerical variables from the plurality of numerical variables based on a causal based feature importance with one or more domain inputs and a feature importance score and identify one or more forward looking statements from the collected textual data using the pre-trained LLM to generate a textual summary of the one or more forward looking statements, wherein a domain insight matrix is used to optimize prompts for the pre-trained LLM.

Further, the one or more hardware processors are configured by the instructions to classify the generated textual summary of the one or more forward looking statements into three classes for a direction of change in an interest rate using the pre-trained LLM, wherein the three classes comprising of a hawkish class, a neutral class and a dovish class, combine the classified generated textual summary into three classes for a direction of change in an interest rate with the selected one or more numerical variables to train a machine learning (ML) multi-class classification model and predict a change in the interest rate using the trained machine learning (ML) multi-class classification model.

In yet another aspect, there are provided one or more non-transitory machine-readable information storage mediums comprising one or more instructions, which when executed by one or more hardware processors causes a method for predicting change in a future fund rate by a financial regulatory body responsible for regulation of interest rate is provided. The processor-implemented method includes collecting, via an Input/Output (I/O) interface, a plurality of historical minutes of meeting of the financial regulatory body responsible for regulation of interest rate, pre-processing the collected numerical data using a pre-trained large language model (LLM) to derive a plurality of numerical variables from the collected numerical data and selecting one or more numerical variables from the plurality of numerical variables based on a causal based feature importance with one or more domain inputs and a feature importance score.

Further, the processor-implemented method includes identifying one or more forward looking statements from the collected textual data using the pre-trained LLM to generate a textual summary of the one or more forward looking statements and classifying the generated textual summary of the one or more forward looking statements into three classes for a direction of change in an interest rate using the pre-trained LLM, wherein the three classes comprising of a hawkish class, a neutral class and a dovish class. Herein, a domain insight matrix is used to optimize prompts for the pre-trained LLM. Furthermore, the processor-implemented method includes combining the classified generated textual summary into three classes for a direction of change in an interest rate with the selected one or more numerical variables to train a machine learning (ML) multi-class classification model and predicting a change in the interest rate using the trained machine learning (ML) multi-class classification model.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of a system for predicting change in a future fund rate by a financial regulatory body responsible for regulation of interest rates, according to some embodiments of the present disclosure.
FIG. 2 is a functional block diagram illustrating the system of FIG. 1 for predicting change in a future fund rate by a financial regulatory body responsible for regulation of interest rate, according to some embodiments of the present disclosure.
FIGS. 3A and 3B are exemplary flow diagrams illustrating a processor-implemented method for predicting change in a future fund rate by a financial regulatory body responsible for regulation of interest rate, according to some embodiments of the present disclosure.
FIG. 4 is a functional block diagram illustrating a processor-implemented method for predicting change in a future fund rate by a financial regulatory body responsible for regulation of interest rate, according to some embodiments of the present disclosure
FIG. 5 is a functional block diagram to illustrate feature selection based on feature importance, according to some embodiments of the present disclosure.
FIG. 6 a functional block diagram to illustrate domain insight matrix to optimize prompts, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The Federal Open Market Committee (FOMC) is the policymaking body of the Federal Reserve System. It set the target federal funds rate, based on prevailing economic conditions. The federal funds rate can influence short-term rates on consumer loans and credit cards. Investors monitor the federal funds rate because it has an impact on the stock market. The problem statement is to predict future fund rate in the next meeting based on current economic conditions and data of last meeting happened. The main challenges are faced in forward-looking statements extraction, it's not obvious to extract statements which will contribute to predicting future interest rates.

Embodiments herein provide a method and system for predicting change in a future fund rate by a financial regulatory body responsible for regulation of interest rates. Herein, textual data as well as numerical data are collected to extract useful textual summary of forward-looking statements from large corpus of text data which will contribute to predict future fund rate. The change in the interest rate is predicted based on current meeting data and economic conditions. This is an originally regression problem, but disclosure formulates it as a classification problem. Instead of predicting interest rate, change in interest rate is predicted which is observed to belong fixed categories such as (1, 0.75, 0.50, 0.25, 0, -0.25, -0.50, -0.75, -1).

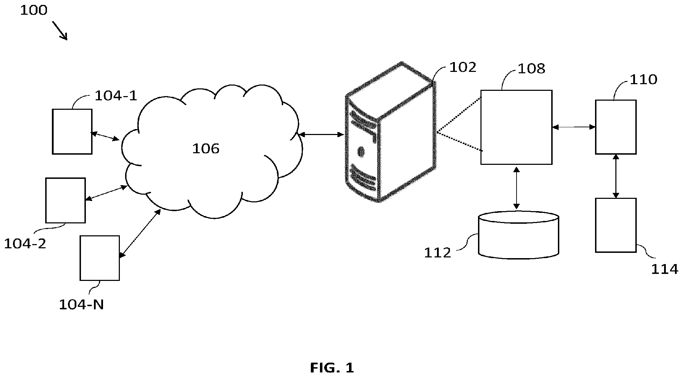

Referring now to the drawings, and more particularly to FIG. 1 through FIG. 6, where similar reference characters denote corresponding features consistently throughout the figures, there are shown preferred embodiments, and these embodiments are described in the context of the following exemplary system and/or method.

FIG. 1 illustrates a block diagram of a system 100 for predicting change in a future fund rate by a financial regulatory body responsible for regulation of interest rate, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH^{®}, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

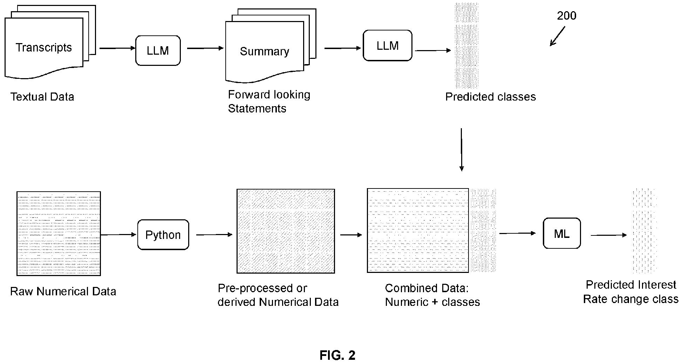

FIG. 2 is a functional block diagram 200 to illustrate the system 100 for predicting change in a future fund rate by a financial regulatory body responsible for regulation of interest rates, according to some embodiments of the present disclosure. In one embodiment, the system 100 is configured for predicting a change in a future fund rate by the financial regulatory body responsible for regulation of interest rate. The system is configured to identify and generate summary of forward-looking statements from textual data with a pre-trained Large Language Model (LLM). There are key domain inputs which are used to identify and generate high quality summary of forward-looking statements. statements spoken by a presiding officer of the financial regulatory body responsible for regulation of interest rate are identified and reference meeting date is provided to analyze text and avoid statements which talk about past months with respect to this date.

Herein, a domain insight matrix is used, which goes beyond optimizing prompts. It serves as a comprehensive framework for guiding the pre-trained LLM on how to approach a task and validate the outputs based on predefined categories and parameters set by domain experts. With prompt optimization efforts, a good quality summary of forward-looking statements is achieved.

In another aspect, for a given data source of numerical information of economic data, the system 100 is configured to scrape the data then do pre-processing of data including cleaning and deriving expected numerical variables from available numerical information. Further, the system is configured to select numerical variables based on availability of data and feature importance with domain inputs and feature importance score to achieve maximum data available for training simultaneously considering importance of features.

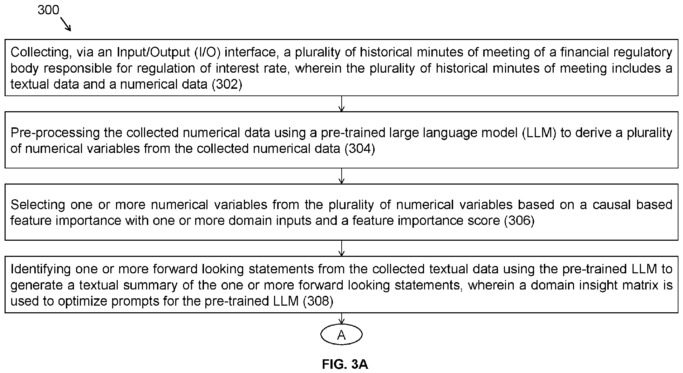

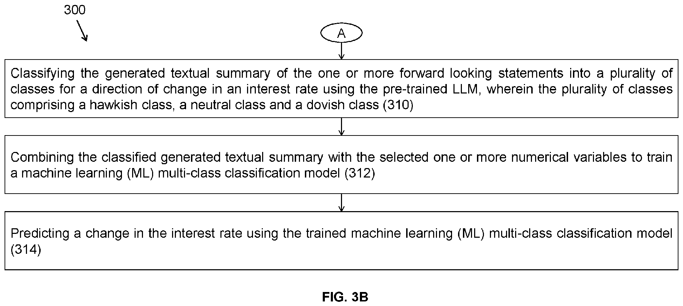

FIGS. 3A and 3B are flow diagrams illustrating a processor-implemented method 300 for predicting change in a future fund rate by a financial regulatory body responsible for regulation of interest rate implemented by the system 100 of FIG. 1, in accordance with an embodiment of the present disclosure. Functions of the components of the system 100 are now explained through steps of flow diagram in FIGS. 3A and 3B, according to some embodiments of the present disclosure. In the method and system for predicting change in a future fund rate by a financial regulatory body responsible for regulation of interest rate.

Initially, at step 302 of the processor-implemented method 300, the one or more hardware processors 108 are configured by the programmed instructions to collect a plurality of historical minutes of meeting of the financial regulatory body responsible for regulation of interest rate. The plurality of historical minutes of meeting includes a textual data and a numerical data. For Example:
1. Forward looking statement extracted on labor:
   *"Economic growth and job creation have both been a bit stronger than we anticipated, while inflation has been somewhat weaker".*
2. Forward looking statement extracted on price:
   a. *"Overall inflation for the twelve months ended in March was 1.5 percent".*
   b. *"Core inflation unexpectedly fell as well, however, as of March stood at 1.6 percent for the previous twelve months".*
3. Forward-looking statement extracted on general aspects:
   a. *"Overall, the economy continues on a healthy path, and the committee believes that the current stance of policy is appropriate".*
   b. *"So, we don't feel like the data's pushing us in either direction".*

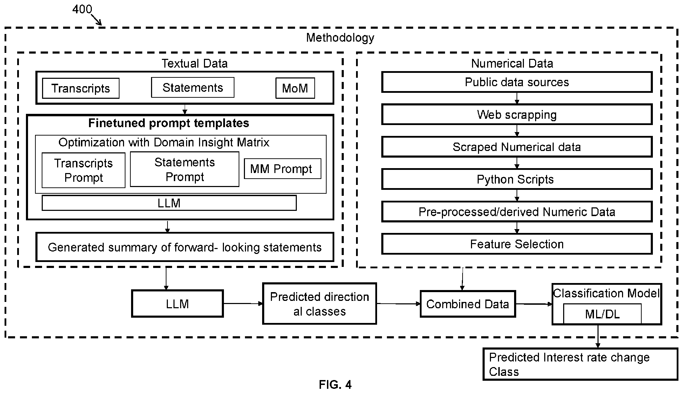

FIG. 4 is a functional block diagram illustrating the processor-implemented method for predicting change in a future fund rate by a financial regulatory body responsible for regulation of interest rate, according to some embodiments of the present disclosure.

In one aspect, the textual data is collected to identify and generate a summary of forward-looking statements with the pre-trained LLM based on one or more key domain inputs. The one or more key domain inputs include statements spoken by a presiding office of the financial regulatory body responsible for regulation of interest rate and reference meeting date to analyze text and extract the forward-looking statements which could impact the movement of interest rate in future. The system herein is configured to decipher the effect of each statement made in the meeting and extract only those statements which have an effect on interest rate change.

At the next step 304 of the processor-implemented method 300, the one or more hardware processors 108 are configured by the programmed instructions to pre-process the collected numerical data using a predefined rules-based technique such as python scripts to derive a plurality of numerical variables from the collected numerical data. For a given data source of numerical information of economic data, pre-processing of data includes cleaning and deriving expected numerical variables from available numerical information.

At the next step 306 of the processor-implemented method 300, the one or more hardware processors 108 are configured by the programmed instructions to select one or more numerical variables from the plurality of numerical variables based on a causal based feature importance with one or more domain inputs and a feature importance score.

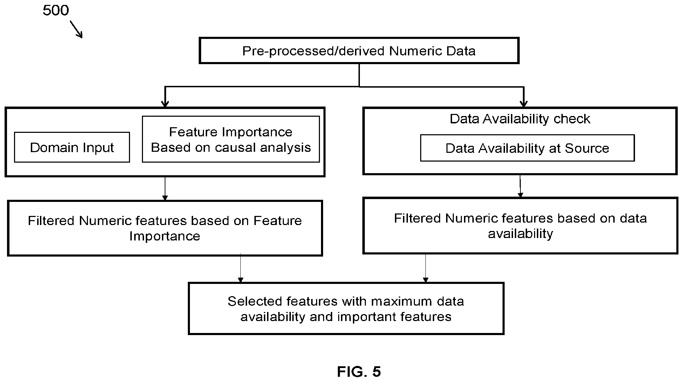

FIG. 5 is a functional block diagram 500 to illustrate a processor-implemented method for predicting change in a future fund rate by a financial regulatory body responsible for regulation of interest rate, according to some embodiments of the present disclosure.

In one aspect, the selection of features happens in two ways. Firstly, at least one domain expert is collaborated to understand which features are theoretically significant based on economic principles. This data is used along with historical numerical data in the causal inference technique, where feature importance assignment is a model-agnostics technique. Here the causal inference technique understands the effect of each numerical variable on the output by analyzing the historical data. Based on this analysis, feature importance value is assigned to each of the variables and stored therein. When an incoming data comes, a threshold is applied on the importance and only the variables that pass the threshold are considered as input for final prediction. Secondly, the data availability at source is considered and a careful selection is made to avoid any bias in the system due to unavailability of data.

In another aspect, understanding how features contribute to model predictions can be achieved through the causal based feature importance. A classical feature selection technique selects features based on the correlations between predictive features and the class variable and does not attempt to capture causal relationships between them. A threshold is applied for feature importance score to get filtered set of features.

At the next step 308 of the processor-implemented method 300, the one or more hardware processors 108 are configured by the programmed instructions to identify one or more forward looking statements from the collected textual data using a pre-trained large language model (LLM) to generate a textual summary of the one or more forward looking statements. Herein, a domain insight matrix is used to optimize prompts for the pre-trained LLM. The domain insight matrix is a comprehensive framework for guiding the pre-trained LLM on how to approach a task and validate the outputs based on predefined categories and parameters set by domain experts.

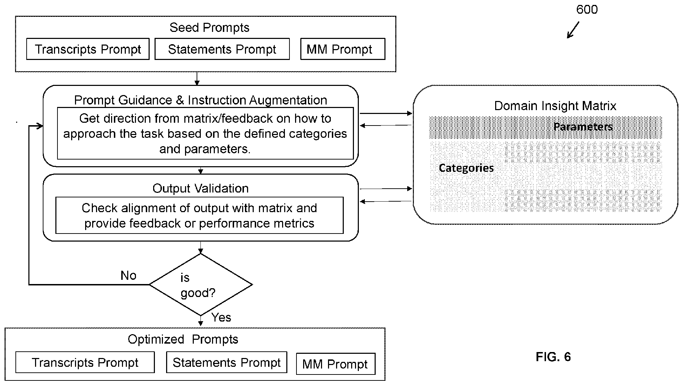

FIG. 6 a functional block diagram to illustrate domain insight matrix for optimizing prompts, according to some embodiments of the present disclosure. The domain insight matrix optimizes one or more seed prompts. The seed prompt optimization includes customizing seed level prompts for each data type, wherein the data type includes a transcript, and a minute of meeting. Further, the domain insight matrix augments prompt guidance based on predefined one or more categories and one or more parameters. Herein, the output is iteratively validated with the domain insight matrix to provide one or more performance metrices to augment the seed prompt using the pre-trained LLM.

At the next step 310 of the processor-implemented method 300, the one or more hardware processors 108 are configured by the programmed instructions to classify the generated textual summary of the one or more forward looking statements into a plurality of classes for a direction of change in an interest rate using the LLM. The plurality of classes comprises of a hawkish class, a neutral class and a dovish class. The main task here is to decipher the effect of the extracted forward looking statements. It can have a positive, negative or neutral effect on the interest rate change based on which the system predicts if the interest rate will increase, decrease or remain the same.

At the next step 312 of the processor-implemented method 300, the one or more hardware processors 108 are configured by the programmed instructions to combine the classified generated textual summary into a plurality of classes for a direction of change in an interest rate with the selected one or more numerical variables to train a machine learning (ML) multi-class classification model. At this stage the system deciphers the class that indicates the interest rate change. The classes herein indicate the amount of change in the interest rate which is then combined with direction of change to arrive at the final value prediction.

Finally, at the last step 314 of the processor-implemented method 300, the one or more hardware processors 108 are configured by the programmed instructions to predict a change in the interest rate using the trained machine learning (ML) multi-class classification model.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of predicting future fund rate in the next meeting of the financial regulatory body responsible for regulation of interest rate based on current economic conditions and data of last meeting happened. Embodiments herein provide a method and system for predicting change in a future fund rate by federal open market committee of the federal reserve. Herein, textual data as well as numerical data are collected to extract useful textual summary of forward-looking statements from large corpus of text data using a LLM which will contribute to predict future fund rate. A domain insight matrix is used as a comprehensive framework for guiding the LLM on how to approach a task and validate the outputs based on predefined categories and parameters set by domain experts. With prompt optimization efforts, a good quality summary of forward-looking statements is achieved.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) comprising:
collecting (302), via an Input/Output (I/O) interface, a plurality of historical minutes of meeting of a financial regulatory body responsible for regulation of interest rate, wherein the plurality of historical minutes of meeting includes a textual data and a numerical data;
pre-processing (304), via one or more hardware processors, the collected numerical data using a pre-trained large language model (LLM) to derive a plurality of numerical variables from the collected numerical data;
selecting (306), via the one or more hardware processors, one or more numerical variables from the plurality of numerical variables based on a causal based feature importance with one or more domain inputs and a feature importance score;
identifying (308), via the one or more hardware processors, one or more forward looking statements from the collected textual data using the pre-trained LLM to generate a textual summary of the one or more forward looking statements, wherein a domain insight matrix is used to optimize prompts for the pre-trained LLM;
classifying (310), via one or more hardware processors, the generated textual summary of the one or more forward looking statements into a plurality of classes for a direction of change in an interest rate using the pre-trained LLM, wherein the plurality of classes comprising a hawkish class, a neutral class and a dovish class;
combining (312), via the one or more hardware processors, the classified generated textual summary with the selected one or more numerical variables to train a machine learning (ML) multi-class classification model; and
predicting (314), via the one or more hardware processors, a change in the interest rate using the trained machine learning (ML) multi-class classification model.

2. The processor-implemented method (300) as claimed in claim 1, wherein the domain insight matrix is a comprehensive framework for guiding the LLM on how to approach a task and validate the outputs based on predefined categories and parameters set by domain experts.

3. The processor-implemented method (300) as claimed in claim 1, wherein the optimization of prompt using the domain insight matrix includes:
customizing seed level prompts for each data type, wherein the data type includes a transcript, and a minute of meeting (MM);
augmenting one or more instruction and prompt guidance based on a direction from the domain insight matrix based on predefined one or more categories and one or more parameters; and
validating iteratively output with the domain insight matrix to provide one or more performance metrics to augment the seed prompt using the LLM.

4. The processor-implemented method (300) as claimed in claim 1, wherein the causal based feature importance is used to understand contribution of one or more features in a model prediction.

5. A system (100) comprising:
a memory (110) storing instructions;
one or more Input/Output (I/O) interfaces (104); and
one or more hardware processors (108) coupled to the memory (110) via the one or more I/O interfaces (104), wherein the one or more hardware processors (108) are configured by the instructions to:
collect a plurality of historical minutes of meeting of a financial regulatory body responsible for regulation of interest rate, wherein the plurality of historical minutes of meeting includes a textual data and a numerical data;
pre-process the collected numerical data using a pre-trained large language model (LLM) to derive a plurality of numerical variables from the collected numerical data;
select one or more numerical variables from the plurality of numerical variables based on a causal based feature importance with one or more domain inputs and a feature importance score;
identify one or more forward looking statements from the collected textual data using the pre-trained LLM to generate a textual summary of the one or more forward looking statements, wherein a domain insight matrix is used to optimize prompts for the pre-trained LLM;
classify the generated textual summary of the one or more forward looking statements into a plurality of classes for a direction of change in an interest rate using the pre-trained LLM, wherein the plurality of classes comprising a hawkish class, a neutral class and a dovish class;
combine the classified generated textual summary with the selected one or more numerical variables to train a machine learning (ML) multi-class classification model; and
predict a change in the interest rate using the trained machine learning (ML) multi-class classification model.

6. The system (100) as claimed in claim 5, wherein the domain insight matrix is a comprehensive framework for guiding the LLM on how to approach a task and validate the outputs based on predefined categories and parameters set by domain experts.

7. The system (100) as claimed in claim 5, wherein the optimization of prompt using the domain insight matrix includes:
customizing seed level prompts for each data type, wherein the data type includes a transcript, and a minute of meeting (MM);
augmenting one or more instruction and prompt guidance based on a direction from the domain insight matrix based on predefined one or more categories and one or more parameters; and
validating iteratively output with the domain insight matrix to provide one or more performance metrics to augment the seed prompt using the LLM.

8. The system (100) as claimed in claim 5, wherein the causal based feature importance is used to understand contribution of one or more features in a model prediction.

9. One or more non-transitory machine-readable information storage mediums comprising one or more instructions which when executed by one or more hardware processors cause:
collecting, via an Input/Output (I/O) interface, a plurality of historical minutes of meeting of a financial regulatory body responsible for regulation of interest rate, wherein the plurality of historical minutes of meeting includes a textual data and a numerical data;
pre-processing the collected numerical data using a pre-trained large language model (LLM) to derive a plurality of numerical variables from the collected numerical data;
selecting one or more numerical variables from the plurality of numerical variables based on a causal based feature importance with one or more domain inputs and a feature importance score;
identifying one or more forward looking statements from the collected textual data using the pre-trained LLM to generate a textual summary of the one or more forward looking statements, wherein a domain insight matrix is used to optimize prompts for the pre-trained LLM;
classifying the generated textual summary of the one or more forward looking statements into a plurality of classes for a direction of change in an interest rate using the pre-trained LLM, wherein the plurality of classes comprising a hawkish class, a neutral class and a dovish class;
combining the classified generated textual summary with the selected one or more numerical variables to train a machine learning (ML) multi-class classification model; and
predicting a change in the interest rate using the trained machine learning (ML) multi-class classification model.

10. The one or more non-transitory machine-readable information storage mediums of claim 9, wherein the domain insight matrix is a comprehensive framework for guiding the LLM on how to approach a task and validate the outputs based on predefined categories and parameters set by domain experts.

11. The one or more non-transitory machine-readable information storage mediums of claim 9, wherein the optimization of prompt using the domain insight matrix includes:
customizing seed level prompts for each data type, wherein the data type includes a transcript, and a minute of meeting (MM);
augmenting one or more instruction and prompt guidance based on a direction from the domain insight matrix based on predefined one or more categories and one or more parameters; and
validating iteratively output with the domain insight matrix to provide one or more performance metrics to augment the seed prompt using the LLM.

12. The one or more non-transitory machine-readable information storage mediums of claim 9, wherein the causal based feature importance is used to understand contribution of one or more features in a model prediction.
